# EUROPÄISCHE PATENTSCHRIFT

(11) **EP 3 545 474 B1**
(45) Veröffentlichungstag und Bekanntmachung des Hinweises auf die Patenterteilung: **14.10.2026**
(21) Anmeldenummer: 17742217.7
(22) Anmeldetag: 13.07.2017
(51) Int. Cl.: G06Q 10/06, G06Q 10/20

(54) **VERFAHREN ZUM BETREIBEN EINER ANLAGE ZUM VERARBEITEN VON FLÜSSIGEN LEBENSMITTELPRODUKTEN**
METHOD FOR OPERATING A SYSTEM FOR PROCESSING LIQUID FOOD PRODUCTS
PROCÉDÉ DE FONCTIONNEMENT D'UNE INSTALLATION DE TRAITEMENT DE PRODUITS ALIMENTAIRES LIQUIDES

(30) Priorität: 25.11.2016 DE 102016223411
(43) Veröffentlichungstag der Anmeldung: 02.10.2019
(73) Patentinhaber: Krones AG, 93073 Neutraubling (DE)
(72) Erfinder: WILDSFEUER, Felix, 93073 Neutraubling (DE)
(74) Vertreter: Grünecker Patent- und Rechtsanwälte PartG mbB
(86) Internationale Anmeldenummer: PCT/EP2017/067719
(87) Internationale Veröffentlichungsnummer: WO 2018/095588

(56) Entgegenhaltungen:
- WO-A1-2015/025012
- WO-A2-02/05044
- WO-A2-03/023570
- GB-A- 2 247 333
- US-A1- 2013 138 465
- US-A1- 2013 217 417
- US-A1- 2013 233 922
- US-A1- 2013 278 635
- US-A1- 2014 149 172
- TAYLOR MARTIN: "Use this low-budget hack to control your smart home more easily", 26 February 2016 (2016-02-26), XP055760680, Retrieved from the Internet <URL:https://www.cnet.com/how-to/use-this-low-budget-hack-to-control-your-smart-home-more-easily/> [retrieved on 20201216]

## Beschreibung

Die Erfindung betrifft ein Verfahren zum Betreiben einer Anlage zum Verarbeiten von flüssigen Lebensmittelprodukten, wobei das Betreiben der Anlage automatisch ausführbare Schritte und manuell an verschiedenen Elementen der Anlage auszuführende Schritte umfasst.

Unter den Begriff "Betreiben der Anlage" fällt sowohl die Produktion eines Produktes mittels der Anlage als auch die Umstellung der Anlage auf die Produktion eines anderen Produktes, gegebenenfalls einschließlich einer Reinigung der Anlage.

Anlagen zum Verarbeiten von flüssigen Lebensmittelprodukten sind häufig teilautomatische Anlagen, bei denen automatisch angesteuerte Anlagenteile vorhanden sind, wie Ventile, Motoren von Rührwerken oder Pumpen, mit bzw. an denen automatisch ausführbare Schritte durchgeführt werden, aber auch manuell zu bedienende Anlagenteile, beispielsweise Verbindungselemente von Schlauchverbindungen oder Klappen, an bzw. mit denen Schritte manuell auszuführen sind.

Grundsätzlich besteht bei solchen Anlagen die Gefahr einer Fehlbedienung der Anlage, beispielsweise, dass Schritte ausgelassen oder falsch durchgeführt werden.

Ein Beispiel dafür sind Schlauchverbindungen in größeren Anlagen, beispielsweise Gär- und Lagerkellern in Schlauchtechnik, bei denen es auf Grund der Größe nicht unwahrscheinlich ist, dass die Übersicht über die hergestellten (oder nicht hergestellten) Verbindungen, auf Grund der größeren Distanzen und Anzahl der Schläuche verloren geht, so dass Verbindungen nicht oder falsch hergestellt werden. Hieraus können Material-, Produkt-, und Personenschäden folgen.

Beispielsweise könnte ein (teil)automatisch ablaufender Reinigungsvorgang zu großen Schäden führen, wenn nicht die richtigen Leitungsverbindungen hergestellt bzw. getrennt sind.

Initiatoren am Anschlusspunkt, die auf mögliche Probleme hinweisen könnten sind teuer, auch durch die Verdrahtung sowie Personalkosten für die Wartung und andere Folgekosten und können gegebenenfalls nur Auskunft darüber geben, dass eine Verbindung hergestellt wurde, allerdings nicht darüber, ob es die richtige ist. Das wiederum erhöht die Wahrscheinlichkeit von Fehlbedienungen, Unfällen und Personenschäden.

Der Erfindung liegt also die Aufgabe zu Grunde, ein Verfahren bereitzustellen, das die Wahrscheinlichkeit von Fehlbedienungen bzw. Fehlumstellungen von Anlagen, bei denen das Betreiben der Anlage automatisch ausführbare Schritte und manuell an verschiedenen Elementen der Anlage auszuführende Schritte umfasst, reduziert. Mit anderen Worten soll ein Verfahren bereitgestellt werden, das erlaubt, die Gefahr, dass Bedienfehler und daraus resultierende Materialschäden, Produktschäden, Maschinenschäden und Personenschäden auftreten, zu reduzieren und ein sichereres Verfahren zum Betreiben der Anlage zu ermöglichen.

Die Aufgabe wird dadurch gelöst, dass an mindestens einem der verschiedenen Elemente maschinenlesbare Informationen angebracht sind, die das jeweilige Element identifizieren, dass in einer Recheneinheit den manuell auszuführenden Schritten jeweils ein Durchführungsstatus zugeordnet ist, der unter der Bedingung auf "durchgeführt" gesetzt wird, dass mittels eines mobilen Endgeräts die maschinenlesbare Informationen an mindestens einem vorgegebenen Element ausgelesen werden, und dass eine Steuereinrichtung die automatisch ausführbaren Schritte unter Berücksichtigung des Durchführungsstatus steuert.

Das heißt, ein Benutzer kann durch Auslesen bestimmter maschinenlesbarer Informationen bestätigen, dass er bestimmte manuell auszuführende Schritte durchgeführt hat.

Dies erfolgt vor Ort, wo die Informationen eingelesen werden, so dass auf jeden Fall sichergestellt ist, dass der Benutzer vor Ort war, was es wahrscheinlicher macht, dass er den Schritt tatsächlich durchgeführt hat, als würde er dieses einfach mittels einer beliebigen Benutzereingabe bestätigen. Letzteres würde nämlich dazu führen, dass der Benutzer diverse Schritte durchführen und dann basierend auf seiner Erinnerung angeben könnte, dass er sie durchgeführt hat, wobei hier die Gefahr besteht, dass der Benutzer sich nicht richtig erinnert und gewisse Schritte vergessen hat.

Außerdem werden Prozesse und ihre Teilschritte nachvollziehbarer und die korrekte Ausführung kann besser überprüft werden, beispielsweise durch den Braumeister oder Sicherheitsbeauftragten.

Anwendbar ist das Verfahren auf diverse Anlagen in der Getränke- und Lebensmittelindustrie, wie zum Beispiel in Brauereien, insbesondere in Anlagen die Tanks und Leitungs- oder Schlauchsysteme umfassen. Die Elemente der Anlage umfassen beispielsweise Armaturen, Klappen, Ventile, Verbindungsstücke, Rohrenden, Schlauchenden, Kabel und Anschlüsse für Kabel.

Die Recheneinheit kann Teil des mobilen Endgeräts oder der Steuereinrichtung sein oder separat vorliegen.

Manuell auszuführende Schritte und automatisch ausführbare Schritte können im Folgenden auch kurz als manuelle bzw. automatische Schritte bezeichnet werden.

Mit dem Begriff "identifiziert" ist hier gemeint, dass die an einem Element angebrachten Informationen, genau einem Element der Anlage zugeordnet sind, so dass anhand dieser Informationen eindeutig bestimmt werden kann, welches Element sie kennzeichnen. Genau die Informationen, die genau ein Element identifizieren, werden im Folgenden teilweise auch als "eine Information" bezeichnet, beispielsweise im Sinne von ein Strichcode oder ein QR-Code^{©}.

Das vorgegebene Element kann auch als zu dem jeweiligen Schritt gehörend oder dem jeweiligen Schritt zugeordnet bezeichnet werden.

Dass eine Information "an einem Element angebracht" ist umfasst, dass diese unmittelbar auf das Element aufgedruckt, aufgelasert oder eingraviert ist oder an dem Element befestigt, beispielsweise festgeklemmt, angehängt oder angeklebt, ist, insbesondere unlösbar am Element befestigt ist, beispielsweise auf bzw. an Armaturen, Klappen, Ventilen, Verbindungsstücken, Rohrenden, oder Schlauchenden. Im Fall von Anschlussstücken oder Kabelanschlüssen an einem Panel kann die Information nicht nur unmittelbar auf das Element aufgedruckt oder an dem Element befestigt sein sondern alternativ an dem Panel neben dem Element derart angeordnet sein, dass eine eindeutige Zuordnung der Information zu dem Element möglich ist.

Der Begriff "Durchführungsstatus" und seine Werte (beispielsweise "durchgeführt", "nicht durchgeführt") werden in dieser Anmeldung verwendet, um zum Ausdruck zu bringen, dass die Information, die einer Recheneinheit bezüglich der Durchführung eines Schrittes vorliegt, nicht zwangsläufig der Realität entsprechen muss, da es durchaus möglich ist, dass ein Benutzer maschinenlesbare Informationen ausliest und gegebenenfalls der Durchführungsstatus auf "durchgeführt" gesetzt wird, ohne dass er den entsprechenden Schritt bereits ausgeführt hat. Beispielsweise ist nicht ausgeschlossen, dass ein Benutzer erst die Informationen ausliest und dann den entsprechenden Schritt ausführt. Das heißt, die Begriffswahl ermöglicht eine Unterscheidung zwischen dem Zeitpunkt der tatsächlichen Durchführung eines Schrittes und dem Zeitpunkt, zu dem die Recheneinheit den Schritt als durchgeführt betrachtet.

Die Begriffe "durchgeführt", "nicht durchgeführt" oder "fehlerhaft durchgeführt" werden lediglich stellvertretend für Informationen beliebigen Formats (Namen, Buchstaben, Ziffern, oder Ähnliches) verwendet, die diese Durchführungszustände eindeutig identifizieren. Beispielsweise könnte in einem Speicher ein Wert "1" bedeuten, dass ein Schritt als durchgeführt gilt, und ein Wert "0", dass der Schritt nicht als durchgeführt gilt.

In der Anmeldung wird beschrieben, dass der Durchführungsstatus auf "durchgeführt", "nicht durchgeführt" oder "fehlerhaft durchgeführt" gesetzt wird. Dazu sei angemerkt, dass das "Setzen" des Durchführungsstatus nicht zwangsläufig ein Ändern des Durchführungsstatus sein muss. Sprich, der Begriff soll auch umfassen, dass, wenn bestimmt wird, dass sich der Durchführungsstatus nicht ändert, sprich, der Durchführungsstatus wieder auf den gleichen Wert gesetzt wird. Dieses "Setzen" muss nicht zwangsläufig ein erneutes Beschreiben eines Speicherzustandes zur Folge haben.

Die Steuereinrichtung kann die automatisch ausführbaren Schritte derart steuern, dass vorgegebene automatisch ausführbare Schritte erst ausgeführt werden, nachdem der Durchführungsstatus vorgegebener manuell auszuführender Schritte auf "durchgeführt" gesetzt wurde.

Beispielsweise kann die Steuereinrichtung ausgelöst durch eine Benutzereingabe und/oder zu bestimmten Zeitpunkten und/oder in bestimmten Zeitabständen überprüfen, ob der Durchführungsstatus der vorgegebenen manuell auszuführenden Schritte auf "durchgeführt" gesetzt ist. Wenn bei dieser Überprüfung bestimmt wird, dass dies der Fall ist, können die vorgegebenen automatisch ausführbaren Schritte durchgeführt werden und keine weitere Abfrage des Durchführungsstatus der vorgegebenen manuell auszuführenden Schritte erfolgen.

Wenn eine solche Überprüfung ergibt, dass nicht für alle vorgegebenen manuell auszuführenden Schritte der Durchführungsstatus auf "durchgeführt" gesetzt ist, werden die vorgegebenen automatisch ausführbaren Schritte nicht ausgeführt und optional der Durchführungsstatus zu einem vorgegebenen späteren Zeitpunkt oder in vorgegebenen Zeitabständen erneut überprüft. Dabei kann der Durchführungsstatus für alle vorgegebenen manuell auszuführenden Schritte erneut überprüft werden, was den Vorteil hat, dass sicher gegangen wird, dass der Benutzer nicht in der Zwischenzeit manuelle Schritte rückgängig gemacht hat und ihren Durchführungsstatus zurückgesetzt hat. Alternativ kann auch nur noch der Durchführungsstatus für die vorgegebenen manuell auszuführenden Schritte überprüft werden, deren Durchführungsstatus bei der vorangegangenen Überprüfung nicht "durchgeführt" war.

Mit dem oben beschriebenen Verfahren kann verhindert werden, dass versehentlich automatische Vorgänge anlaufen bzw. gestartet werden, beispielsweise ein automatischer Reinigungsvorgang, bevor die Anlage dafür vorbereitet ist. Es ist zum Beispiel denkbar, dass die vorgegebenen Schritte manuell auszuführende Schritte sind, dass Lebensmitteltanks von einem Leitungssystem getrennt werden und das Leitungssystem mit einem Reinigungsmitteltank und einem Abfluss verbunden wird. In diesem Fall können automatisch ausführbare Schritte eines automatischen Reinigungsvorgangs des Leitungssystems erst dann ausgeführt werden, wenn der Durchführungsstatus für alle manuellen Schritte auf "durchgeführt" gesetzt wurde. Dabei kann es sich um das automatische Öffnen von Ventilen und Starten von Pumpen handeln.

Indem die Durchführung von automatischen Schritten davon abhängig gemacht wird, ob der Benutzer durch Auslesen der entsprechenden maschinenlesbaren Informationen bestätigt, dass bestimmte vorgegebene manuell auszuführende Schritte erfolgt sind, kann verhindert werden, dass Schäden auftreten, die dadurch verursacht sind, dass das System noch nicht in den Ausgangszustand für die vorgegebenen automatisch ausführbaren Schritte gebracht wurde.

Es ist möglich, die Durchführung der vorgegebenen automatisch ausführbaren Schritte, nach dem Setzen des Durchführungsstatus des letzten vorgegebenen manuell auszuführenden Schrittes auf "durchgeführt", um ein vorgegebenes Zeitintervall zu verzögern. Alternativ oder zusätzlich kann das Setzen des Durchführungsstatus auf "durchgeführt" nach dem Auslesen der entsprechenden Informationen um ein vorgegebenes Zeitintervall verzögert werden. Dadurch kann berücksichtigt werden, dass ein Benutzer erst die Informationen ausliest und dann den entsprechenden Schritt durchführt. Mit anderen Worten wird dadurch berücksichtigt, dass das Setzen des Durchführungsstatus eines Schrittes auf "durchgeführt" vor der tatsächlichen Durchführung des Schrittes auftreten kann.

Die manuell auszuführenden Schritte können ein Verbinden zweier vorgegebener Elemente, insbesondere Rohre, Schläuche und/oder Stutzen, der Anlage umfassen und das Verfahren kann umfassen, dass mittels der Recheneinheit bestimmt wird, ob zwei unmittelbar nacheinander mit dem mobilen Endgerät ausgelesene maschinenlesbare Informationen die beiden vorgegebenen Elemente identifizieren, und optional, ob die beiden Informationen in einem vorgegebenen Zeitfenster ausgelesen wurden.

Der Durchführungsstatus für den Schritt des Verbindens der beiden vorgegebenen Elemente kann unter der Bedingung auf "durchgeführt" gesetzt werden, dass die unmittelbar nacheinander ausgelesenen maschinenlesbaren Informationen die beiden vorgegebenen Elemente identifizieren, und insbesondere in einem vorgegebenen Zeitfenster ausgelesen wurden, und andernfalls auf "nicht durchgeführt" gesetzt werden.

Dies ermöglicht, dass für die Steuereinheit ersichtlich ist, dass der manuelle Schritt nicht bzw. falsch durchgeführt wurde, was wiederum verhindert, dass fälschlicherweise automatisch ausführbare Schritte gestartet werden.

Das verhindert insbesondere, dass für den Fall, dass ein Benutzer zwei falsche Elemente miteinander verbindet oder bestimmte Elemente gar nicht verbindet, die verbunden werden müssten, die Recheneinheit und die Steuereinheit fälschlicherweise davon ausgehen, dass dieser Schritt ausgeführt wurde, und dass dann gegebenenfalls automatische Schritte eingeleitet werden, die erst nach der korrekten Ausführung dieses Schrittes hätten erfolgen sollen. Das heißt, dass ein Bedienfehler eines Benutzers abgefangen werden kann und nicht zu unmittelbaren Schäden führt.

Es sei noch angemerkt, dass durch die Vorgabe, dass es sich um das gleiche Endgerät handelt und dass die Informationen unmittelbar nacheinander und vorzugsweise in einem vorgegebenen Zeitfenster ausgelesen werden, die Wahrscheinlichkeit größer ist, dass die Informationen der beiden Elemente nicht zufällig ausgelesen wurden, ohne dass der entsprechende Schritt tatsächlich durchgeführt wurde.

So kann sichergestellt werden, dass die richtigen Elemente miteinander verbunden sind.

Zudem kann ein manuell auszuführender Schritt umfassen, dass zwei Elemente, nachdem sie miteinander verbunden wurden, mittels eines Verriegelungselements verriegelt werden, beispielsweise nachdem sie zusammengesteckt wurden. Beispielsweise kann es sich dabei um einen Klemmhebel, ein Bajonett oder eine Befestigungsmutter handeln. Es ist möglich, dass für diesen Verriegelungsschritt ebenfalls eine Bestätigung erfolgt. Dazu kann an dem Verriegelungselement eine maschinenlesbare Information angebracht sein, die das jeweilige Element identifiziert und der ein Verriegelungsschritt zugeordnet ist.

Das Verriegelungselement kann auch zweiteilig oder mehrteilig ausgebildet sein und durch Verstellen der relativen Position der beiden Teile kann die Verriegelung erfolgen. In diesem Fall kann an jedem Teil jeweils eine maschinenlesbare Information angebracht sein. Dem Verriegelungsschritt können dann beide Informationen zugeordnet sein und der Durchführungsstatus auf "durchgeführt" gesetzt werden, wenn beide Informationen ausgelesen werden, ähnlich wie bei dem oben beschriebenen Verbindungsschritt. Vorzugsweise sind die beiden Informationen derart positioniert, dass anhand der Position der beiden Informationen ersichtlich ist, ob eine Verriegelung erfolgt ist, oder nicht. Beispielsweise können die Informationen versetzt angeordnet sein, wenn keine Verriegelung vorliegt und in einer Linie angeordnet, wenn eine Verriegelung vorliegt. Alternativ kann auch nur an einem der beiden Teile eine maschinenlesbare Information angebracht sein, die zum Bestätigen des Verriegelungsschrittes dient, und eine optische Kennzeichnung, die die Verriegelungsposition anzeigt aber nicht notwendig maschinenlesbar ist, kann an dem anderen Teil angebracht sein.

Ähnlich zu dem zweiteiligen Verriegelungselement kann auch verfahren werden, wenn zum Verriegeln die Position des Verriegelungselements gegenüber einem anderen Element, das nicht Teil des Verriegelungselements ist, verstellt wird. Auch hier kann mindestens an dem Verriegelungselement eine entsprechende maschinenlesbare Information angebracht sein, mit der der Verrieglungsschritt bestätigt werden kann. Ähnlich wie oben kann auch hier eine weitere Information, optional eine maschinenlesbare Information, an dem anderen Element angebracht sein, so dass für den Benutzer anhand der relativen Position der beiden Informationen erkennbar ist, ob eine Verriegelung erfolgt ist.

Es ist ebenfalls denkbar, dass mittels der Kamera des mobilen Endgeräts ein Foto eines Verriegelungselements und gegebenenfalls auch der zu verriegelnden Elemente erstellt wird. Es kann ein Sollzustand hinterlegt sein, beispielsweise in Form eines Fotos von dem Verriegelungselement bzw. verschiedenen Teilen des Verriegelungselements in der Verriegelungsposition, wobei das Foto optional zusätzlich auch die zu verriegelnden Elemente abbilden kann. Durch Vergleich der beiden Fotos kann dann bestimmt werden, ob der Schritt des Verriegelns der korrekten Elemente korrekt ausgeführt wurde. Beispielsweise kann bestimmt werden, ob sich ein Klemmhebel in der richtigen Verriegelungsposition befindet. Eine zusätzliche maschinenlesbare Information an dem Verriegelungselement oder den Teilen des Verriegelungselements ist nicht zwangsläufig nötig, wenn ein Vergleich von Fotos erfolgt. Der Vergleich der Fotos kann mittels Bildverarbeitung erfolgen und durch das Benutzerendgerät oder die Recheneinheit durchgeführt werden. Zusätzliche maschinenlesbare Informationen an dem Verriegelungselement sind dann nicht unbedingt nötig.

Es kann jedoch optional eine optische Kennzeichnung vorgesehen sein, beispielsweise in Form von optischen Markierungen, die an einer oder mehreren vorgegebenen Positionen an dem Verriegelungselement und optional an anderen Elementen angebracht sind. Solche Markierungen können als Referenzpunkte bei der Bildverarbeitung verwendet werden. Es kann sich beispielsweise um Pfeile, Kreise, Vielecke oder ähnliches handeln. Wenn die Kennzeichnung solche Markierungen umfasst, können die Markierungen beispielsweise mindestens zwei optisch unterscheidbare aber ansonsten beliebig gestaltete Markierungen auf dem Verriegelungselement umfassen. Alternativ oder zusätzlich kann bei einem mehrteiligen Verriegelungselement auf mindestens zwei Teilen, deren relative Position sich beim Verriegeln ändert, jeweils mindestens eine Markierung angeordnet sein. Alternativ oder zusätzlich kann an dem Verriegelungselement mindestens eine Markierung angeordnet sein und die maschinenlesbare(n) Information(en) mindestens eines der zu verbindenden und zu verriegelnden Elemente oder eine Markierung an diesem Element kann als weitere Markierung dienen. So kann bei der Bildverarbeitung vergleichsweise einfach berücksichtig werden, dass der Benutzer das Endgerät unter Umständen in anderer Entfernung oder mit anderer Ausrichtung hält, als es für das Referenzfoto der Fall war.

Von dem mobilen Endgerät kann eine, beispielsweise akustische, optische und/oder haptische, Warnung ausgegeben wird, wenn die oben genannte Bedingung nicht erfüllt ist. Die Ausgabe einer Warnung ist vorteilhaft, weil der Benutzer dann sofort auf den Fehler aufmerksam wird und diesen direkt beheben kann.

Die maschinenlesbaren Informationen können optisch auslesbare Informationen, beispielsweise einen Strichcode oder einen QR-Code^{©}, und/oder elektronisch auslesbare Informationen, beispielsweise mittels einer RFID- oder NFC-Antenne auslesbare Informationen, umfassen.

An mindestens einem der Elemente kann ein RFID-Tag oder eine NFC-Antenne angebracht sein, die die maschinenlesbaren Informationen enthalten, und die Informationen können mittels einer entsprechenden Antenne des mobilen Endgeräts ausgelesen werden.

Alternativ oder zusätzlich kann an mindestens einem der Elemente ein QR-Code^{©} oder ein Strichcode angebracht sein und die Informationen mittels einer Kamera des mobilen Endgeräts ausgelesen werden.

Der Vorteil besteht darin, dass optisch auslesbare Informationen einfach mit der Kamera eines mobilen Endgeräts erfasst werden können und dass fast alle verbreiteten mobilen Endgeräte mit geeigneten Kameras ausgestattet sind. Außerdem sind viele solche Endgeräte auch mit Software ausgestattet, die Strichcodes oder QR-Codes^{©©} auswerten kann. Viele mobile Endgeräte sind ebenfalls bereits mit Antennen ausgestattet, mit denen elektronisch auslesbare Informationen ausgelesen werden können. Beispielsweise unterstützen viele Handys bereits eine NFC-Funktion. Der Vorteil der elektronisch auslesbaren Informationen besteht darin, dass auch schwerer zugängliche Elemente, die gegebenenfalls durch andere Elemente verdeckt sind, damit identifiziert werden können.

Wenn verschiedene Elemente so nah nebeneinander angeordnet sind, dass beim elektronischen Auslesen gegebenenfalls nicht eindeutig zuzuordnen ist, zu welchem Element die ausgelesene Informationen gehören, was beispielsweise von der Reichweite der jeweiligen Antenne abhängt, kann es vorteilhaft sein, dass zwei benachbart angeordnete maschinenauslesbare Informationen unterschiedlicher Art sind, also beispielweise eine optisch und die andere elektronisch.

Eine Repräsentation zumindest eines Teils der manuell auszuführenden Schritte und ihres jeweiligen aktuellen Durchführungsstatus können auf einem Anzeigeabschnitt, beispielsweise einem Display, des mobilen Endgeräts angezeigt werden, insbesondere gegebenenfalls in der Reihenfolge, in der sie durchgeführt werden müssen, und/oder mit Anweisungen, wie sie durchzuführen sind. Denkbar ist beispielsweise eine Listenansicht oder eine tabellarische Ansicht. Die Anzeige kann automatisch oder nach Aufruf durch den Benutzer, sofort oder auch noch später, erfolgen.

Beispielsweise können alle manuell auszuführenden Schritte und ihr jeweiliger Status oder nur manuell auszuführende Schritte, die noch nicht auf den Durchführungsstatus "durchgeführt" gesetzt wurden, angezeigt werden.

So kann der Benutzer leicht überprüfen, welche Schritte noch durchgeführt werden müssen. Außerdem kann der Benutzer identifizieren, ob alle Schritte korrekt durchgeführt wurden oder ob ein Schritt nicht oder fehlerhaft durchgeführt wurde. Der Benutzer kann so gegebenenfalls auch später noch identifizieren, welcher Schritt nicht korrekt durchgeführt wurde, beispielsweise, wenn er feststellt, dass die Durchführung automatischer Schritte nicht gestartet wird.

Wenn ein Fehler auftritt und dem Benutzer nicht oder nicht sofort auffällt, sondern erst dann, wenn die Anlage nicht wie vorgesehen betrieben werden kann, und wenn, wie bisher, nicht die Möglichkeit besteht, dem Benutzer einen Hinweis zu geben, wo bzw. welcher Fehler aufgetreten ist, ist es bei üblichen Anlagengrößen und der üblichen Anzahl der manuell auszuführenden Schritte sehr aufwändig, den Fehler zu finden und zu beheben. Mit dem oben beschrieben Verfahren kann der Benutzer Fehler gezielt finden und beheben.

Hier sei angemerkt, dass das Merkmal, dass alle Schritte angezeigt werden, umfasst, dass alle Schritte gleichzeitig auf dem Display angezeigt werden, und alternativ, dass der Benutzer zwar alle Schritte einsehen kann, aber nicht alle gleichzeitig, und gegebenenfalls die Ansicht scrollen oder blättern muss. Ersteres ist auf Grund von kleinen Displaygrößen oft nicht praktikabel, weil dann die Informationen auf Grund der geringen Vergrößerung gegebenenfalls nicht mehr erkennbar wären.

Ein Bestimmen, Ändern und/oder Speichern des Durchführungsstatus der manuell auszuführenden Schritte kann mittels des mobilen Endgeräts erfolgen und der jeweils aktuelle Durchführungsstatus eines oder mehrerer der auszuführenden Schritte kann dann von dem mobilen Endgerät mittels einer Datenverbindung an die Steuereinrichtung übertragen werden, insbesondere mit einer kontaktlosen Verbindung wie WLAN oder Bluetooth.

Dies ist vor allem dann vorteilhaft, wenn dem Benutzer auf dem Endgerät angezeigt wird, welchen Durchführungsstatus die Schritte jeweils haben, weil dann nicht erst Informationen an eine andere Vorrichtung, beispielsweise die Steuereinrichtung, gesendet und dort ausgewertet werden müssen und dann der Durchführungsstatus an das Endgerät übermittelt werden muss, bevor diese Anzeige aktualisiert wird.

Das mobile Endgerät kann alternativ oder zusätzlich die maschinenlesbaren Informationen auslesen und mittels einer Datenverbindung, insbesondere mit einer kontaktlosen Verbindung wie WLAN oder Bluetooth, an die Steuereinrichtung übertragen und die Steuereinrichtung kann ein Bestimmen, Ändern, und/oder Speichern des Durchführungsstatus durchführen. Das ist beispielsweise dann vorteilhaft, wenn die Rechenleistung und/oder der Speicher des Endgeräts eher gering sind und/oder wenn am Endgerät die Information, was der aktuelle Durchführungsstatus ist, nicht benötigt wird.

Die Erfindung betrifft auch ein System mit einer Anlage zum Verarbeiten von flüssigen Lebensmittelprodukten. Die Anlage ist derart ausgebildet, dass das Betreiben der Anlage automatisch ausführbare Schritte und manuell an verschiedenen Elementen der Anlage auszuführende Schritte umfasst, wobei an den verschiedenen Elementen maschinenlesbare Informationen angebracht sind, die das jeweilige Element identifizieren. Das System, insbesondere die Anlage, umfasst auch eine Steuereinrichtung zum Steuern automatisch ausführbarer Prozessschritte. Das System umfasst weiterhin ein mobiles Endgerät. Die Steuereinrichtung ist derart ausgebildet, dass sie die automatisch ausführbaren Schritte unter Berücksichtigung eines Durchführungsstatus von einem oder mehreren der manuell auszuführenden Schritte steuert, wobei der Durchführungsstatus wiedergibt, ob mittels des mobilen Endgeräts die maschinenlesbare Informationen an mindestens einem vorgegebenen Element ausgelesen wurde.

Die Steuereinrichtung kann derart ausgebildet sein, dass sie ausgelesene maschinenlesbare Informationen von dem mobilen Endgerät empfängt und anhand der empfangenen maschinenlesbaren Informationen bestimmt, ob der Durchführungsstatus eines oder mehrerer der manuell auszuführenden Schritte geändert, insbesondere auf "durchgeführt" gesetzt, werden muss und, wenn dies der Fall ist, den Durchführungsstatus entsprechend ändert.

Alternativ oder zusätzlich kann die Steuereinrichtung zum Empfangen von Informationen, die einen manuell auszuführenden Schritt und seinen Durchführungsstatus identifizieren, ausgebildet sein. In diesem Fall kann das mobile Endgerät oder eine externe Recheneinheit zum Bestimmen, Ändern und Speichern des Durchführungsstatus ausgebildet sein.

Funktionen, die im Zusammenhang mit dem Verfahren beschrieben wurden, können jeweils durch die Steuereinrichtung und/oder das mobile Endgerät durchgeführt werden, indem diese entsprechend ausgebildet werden.

Es sei angemerkt, dass im oben im Zusammenhang mit dem Verfahren beschriebenen Merkmale auf das System ebenfalls anzuwenden sind und die dort genannten Vorteile analog für die Merkmale des Systems gelten.

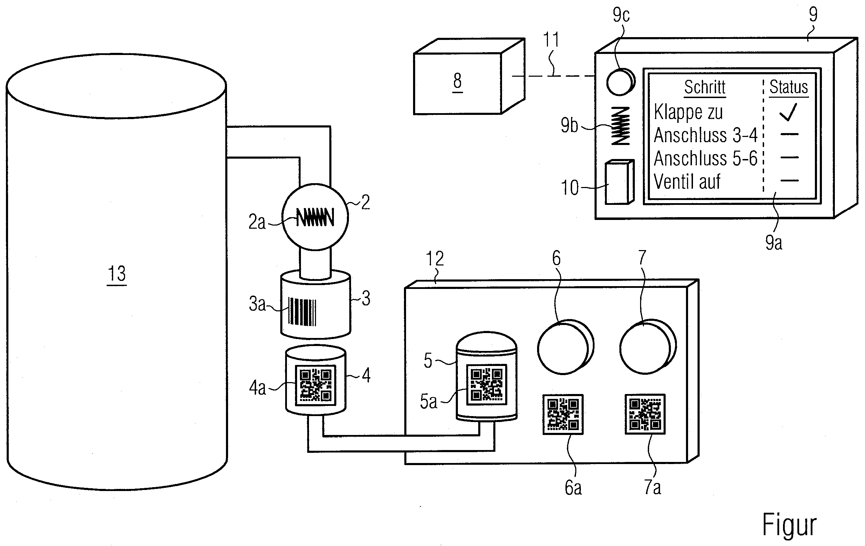

Weitere Merkmale und Vorteile werden nachfolgend anhand der Figur erläutert, die eine schematische, nicht maßstabsgetreue Darstellung eines Ausführungsbeispiels zeigt.

Die Figur zeigt eine Anlage 1 mit Elementen der Anlage 2 bis 7 und entsprechenden maschinenlesbaren Informationen 2a bis 7a, die das jeweilige Element identifizieren. Außerdem zeigt die Figur eine Steuereinrichtung 8, ein mobiles Endgerät 9, hier beispielhaft in Form eines Tablets oder Handys, das einen Anzeigeabschnitt in Form eines Displays 9a, eine NFC-Antenne 9b und eine Kamera 9c umfasst. Außerdem zeigt die Figur die Recheneinheit 10, die hier als Teil des Endgeräts gezeigt ist, aber auch Teil der Steuereinrichtung sein oder separat vorliegen kann. Weiterhin ist eine Datenverbindung 11 zwischen der Steuereinheit und dem Endgerät gezeigt, bei der es sich beispielsweise um eine Drahtlosverbindung wie Bluetooth oder WLAN handeln kann. Es versteht sich, dass die Steuereinheit auch Datenverbindungen aufweist, mit denen sie ihre Steuerfunktion in der Anlage ausführen kann. Diese sind jedoch hier nicht dargestellt und für den Fachmann wären diese selbsterklärend. Die Figur zeigt auch ein Panel 12 und einen Tank 13.

In diesem Beispiel sind die Elemente beispielhaft wie folgt dargestellt: Das Element 2 umfasst eine Absperrklappe, die Elemente 3, 4, 5, 6, und 7, sind Anschlüsse, beispielsweise von Schläuchen oder Rohren. Insbesondere sind in diesem Beispiel die Anschlüsse 3 bis 5 Anschlüsse von einem Rohr oder Schlauch und die Anschlüsse 6 und 7 sind Anschlüsse an einem Panel. Das Bezugszeichen 2a bezeichnet eine NFC-Antenne und die Bezugszeichen 3a bis 7a bezeichnen Strichcodes 3a bzw. QR-Codes^{©} 4a bis 7a.

Beispielsweise können QR-Codes^{©} oder Strichcodes aufgedruckt oder als Etiketten aufgeklebt sein. Die NFC-Antenne kann in einem Schild oder Ähnlichem ausgebildet und an der entsprechenden Stelle festgeklemmt oder angehängt sein. Es ist auch möglich, gedruckte NFC-Antennen zu verwenden.

Es versteht sich jedoch, dass in der Anlage beliebige zusätzliche Elemente oder andere Elemente vorhanden sein können und dass an jedem dieser Elemente eine beliebige der oben genannten maschinenlesbaren Informationen angebracht sein kann. Beispielsweise können nur optische oder nur elektronische Informationen vorliegen.

Ein erfindungsgemäßes Verfahren zum Betreiben einer Anlage zum Verarbeiten von flüssigen Lebensmittelprodukten wird im Folgenden beschrieben. Der Anschaulichkeit halber wird dabei auf die oben beschriebene Anlage Bezug genommen, es kann sich jedoch auch um eine beliebige andere Anlage, bei der an verschiedenen Elementen maschinenlesbare Informationen angebracht sind, die das jeweilige Element identifizieren.

Beispielhaft wird hier beschrieben, wie ein Reinigungsverfahren für eine Anlage eingeleitet wird, bei der mehrere Leitungen, beispielsweise Schläuche oder Rohre, miteinander, mit Tanks und/oder mit Panelen, verbunden sind und Klappen und Ventile als Absperrelemente vorhanden sind.

Dabei können einige Schritte automatisch ausgeführt werden. Beispielsweise können Ventile zu Produkttanks automatisch geschlossen werden und Ventile zu Reinigungsmitteltanks automatisch geöffnet werden. Außerdem kann eine Pumpe zum Pumpen von Reinigungsmedium aus einem der Reinigungsmitteltanks durch zu reinigende Leitungen automatisch gestartet werden. Dazu können Aktoren, beispielsweise Elektromotoren, verwendet werden, die durch eine Steuereinrichtung angesteuert werden.

Andere Schritte, die zum Einleiten des Reinigungsverfahrens durchgeführt werden sind beispielsweise, dass Klappen manuell geöffnet oder geschlossen werden und dass Verbindungen der Leitungen mit anderen Leitungen, Tanks oder Panelen gelöst werden und neue Verbindungen hergestellt werden. Die Verbindungen können beispielsweise Schraubverbindungen mit geeigneten Dichtungseigenschaften sein.

Diese manuellen Schritte werden also an verschiedenen Elementen durchgeführt und einem Schritt kann ein Element (beispielsweise die Klappe) oder zwei Elemente (beispielsweise zwei Anschlussbereiche) oder gegebenenfalls noch mehr Elemente zugeordnet sein. An den Elementen, an denen manuellen Schritte durchgeführt werden, beispielsweise den Klappen und den Anschlussbereichen der Leitungen, Tanks und/oder Panele sind jeweils maschinenlesbare Informationen angebracht, die diese eindeutig identifizieren.

Wie oben beschrieben können diese Informationen optisch auslesbar oder elektronisch auslesbar sein.

In einer Recheneinheit, die beispielsweise Teil des mobilen Endgeräts oder der Steuereinheit ist oder separat vorliegt, sind manuell auszuführende und automatisch ausführbare Schritte hinterlegt und zumindest jedem manuell auszuführenden Schritt und vorzugsweise allen Schritten, die mit bzw. an der Anlage ausführbar sind, ist jeweils ein Durchführungsstatus zugeordnet.

Der Benutzer wählt einen bestimmten Vorgang, beispielsweise das Einleiten des Reinigungsvorgangs, beispielsweise an der Steuereinrichtung direkt oder an dem mobilen Endgerät.

Die Recheneinheit bestimmt dann, welche manuell auszuführenden und welche automatisch ausführbaren Schritte dem ausgewählten Vorgang zugeordnet sind und durchgeführt werden müssen und ob diese in einer bestimmten Reihenfolge erfolgen müssen. Dazu kann die Recheneinrichtung auf gespeicherte Daten zugreifen, die dies festlegen. Alternativ oder zusätzlich kann aber auch ein Benutzer bestimmte Schritte und gegebenenfalls ihre Reihenfolge eingeben und/oder auswählen. Das Bestimmen, welche Schritte durchzuführen sind, umfasst, dass bestimmt wird, bei welchen Schritten der Durchführungsstatus auf "durchgeführt" gesetzt werden muss.

Der Durchführungsstatus kann für alle Schritte zu Beginn des Verfahrens auf "nicht durchgeführt" gesetzt werden, was einem Rücksetzvorgang entspricht. Es ist jedoch denkbar, dass manche Schritte abhängig vom vorangegangenen Prozess gegebenenfalls bereits durchgeführt sind. In diesem Fall kann ihr Durchführungsstatus schon zu Beginn auf "durchgeführt" gesetzt werden.

Wenn der Benutzer den Vorgang startet, prüft die Steuereinrichtung, welche automatisch ausführbare Schritte unabhängig vom Durchführungsstatus anderer Prozesse ausgeführt werden können, und steuert die entsprechenden Elemente an, so dass diese Schritte durchgeführt werden. Der Durchführungsstatus dieser Elemente wird nach erfolgreicher Durchführung auf "durchgeführt" gesetzt. Beispielsweise können bestimmte Ventile unmittelbar zu Beginn des Vorgangs mit einem Aktuator geschlossen werden.

Außerdem kann nun dem Benutzer mittels des mobilen Endgeräts angezeigt werden, welche Schritte er manuell durchführen muss und gegebenenfalls, in welcher Reihenfolge. Eine solche Anzeige ist jedoch optional.

Beispielsweise kann ein erster manuell auszuführender Schritt sein, dass eine Klappe geschlossen wird. Der Benutzer kann dies durchführen und die Durchführung bestätigen, indem er die maschinenlesbaren Informationen an der Klappe mit dem mobilen Endgerät ausliest. Beispielsweise kann er mit der Kamera des Endgeräts einen Strichcode oder QR-Code^{©} fotografieren oder mit einer geeigneten Antenne des Endgeräts Informationen aus einem RFID-Tag oder einer NFC-Antenne auslesen. Der Benutzer ist dabei nicht daran gebunden, dass er die Informationen erst nach der Durchführung ausliest, sondern kann gegebenenfalls auch direkt vor der Durchführung die Informationen auslesen.

Die ausgelesenen Informationen werden dann verarbeitet. Es wird bestimmt, welches Element durch die ausgelesenen Informationen identifiziert wird und welcher Schritt an diesem Element durchzuführen war. Der Durchführungsstatus dieses Schrittes kann dann auf "durchgeführt" gesetzt werden.

Da der Benutzer nicht daran gebunden ist, den Schritt vor dem Auslesen der Informationen durchzuführen, kann optional eine vorgegebene Verzögerung zwischen dem Auslesen und dem Setzen des Durchführungsstatus auf "durchgeführt" vorgesehen sein. Werte für die Verzögerung können in einem Speichermedium hinterlegt sein. Die Werte können für verschiedene Schritte unterschiedlich sein, beispielsweise wenn erfahrungsgemäß ein Schritt länger dauert als ein anderer.

Wenn die manuell auszuführenden Schritte umfassen, dass der Benutzer bestimmte Leitungsenden verbindet, so kann an jedem dieser Enden eine maschinenlesbare Information angebracht sein, beispielsweise ein Code oder eine Antenne. Der Benutzer kann die Informationen an den beiden Enden direkt nacheinander mit dem mobilen Endgerät auslesen, wobei das Auslesen beispielsweise wir oben beschrieben erfolgen kann.

Die Recheneinheit prüft, ob die beiden identifizierten Elemente bestimmte Bedingungen erfüllen. Die Recheneinheit prüft, ob einem manuell auszuführenden Schritt des Vorgangs genau diese beiden Leitungsenden zugeordnet sind, also beispielsweise, ob ein manuell auszuführender Schritt das Verbinden dieser Leitungsenden ist. Außerdem kann optional geprüft werden, ob beide Auslesevorgänge innerhalb eines vorgegebenen Zeitintervalls erfolgen.

Wenn die Bedingung(en) nicht erfüllt ist (sind) und falls einem oder beiden Leitungsenden jeweils ein manuell auszuführender Schritt zugeordnet ist, wird dieser jeweils auf "nicht durchgeführt" gesetzt. Alternativ kann der Durchführungsstatus auch auf "fehlerhaft durchgeführt" gesetzt werden. Optional kann das Endgerät in diesem Fall auch einen Hinweis ausgeben, beispielsweise einen Warnton oder eine Nachricht auf dem Bildschirm des Endgeräts.

Wenn die Bedingung(en) erfüllt ist (sind), kann der Durchführungsstatus dieses Schrittes auf "durchgeführt" gesetzt werden, gegebenenfalls, wie oben erläutert, mit einer vorgegebenen Verzögerung.

Gerade für Schritte, bei denen eine Verbindung korrekt hergestellt werden muss, kann es sinnvoll sein, eine großzügige Verzögerung vorzugeben, weil dann der Benutzer zuerst die beiden Informationen auslesen kann, dann einen Hinweis abwarten kann, ob diese Verbindung korrekt ist, sprich, ob der Durchführungsstatus auf "durchgeführt" gesetzt werden kann, und erst dann die Verbindung tatsächlich vornehmen kann. So kann unnötiges Trennen und Verbinden von Anschlüssen Verbindungen vermieden werden.

Analog kann verfahren werden, wenn ein Leitungsende mit einem Anschluss an einem Panel verbunden wird, wobei dann das Leitungsende und der Anschluss jeweils mit maschinenlesbaren Informationen versehen sind.

Die Recheneinheit kann, beispielsweise in vorgegebenen Abständen, prüfen, ob weitere automatisch ausführbare Schritte, deren Freigabe davon abhängt, dass der Durchführungsstatus vorgegebener manuell auszuführender Schritte auf "durchgeführt" gesetzt wurde, freigegebenen wurden, und die Steuereinrichtung kann dann diese freigegebenen automatisch ausführbaren Schritte einleiten. Optional kann das Freigeben dieser automatisch ausführbaren Schritte mit einer vorgegebenen Verzögerung bezogen auf das Setzen des Durchführungsstatus der vorgegebenen Schritte auf "durchgeführt" erfolgen.

Das heißt, die Steuereinrichtung steuert die automatisch ausführbaren Schritte unter Berücksichtigung des Durchführungsstatus.

Beispielsweise kann das Öffnen bestimmter Ventile zu Tanks mit Reinigungsflüssigkeit und das Starten von Pumpen, die die Reinigungsflüssigkeit durch die Leitungen pumpen, erst dann freigegeben werden, wenn der Durchführungsstatus aller Schritte, die die Leitungen von den Lebensmitteltanks trennen und korrekte Verbindungen zu den Tanks mit Reinigungsflüssigkeit und gegebenenfalls Abwassertanks oder Abläufen herstellen, auf "durchgeführt" gesetzt wurde.

In allen oben genannten Fällen kann das mobile Endgerät optional einen Hinweis ausgeben, wenn der Durchführungsstatus für einen Schritt auf "durchgeführt" gesetzt wird oder wurde. Es kann auch eine Liste mit durchzuführenden Schritten und ihrem jeweils aktuellen Durchführungsstatus anzeigen, wobei die Schritte vorzugsweise in der Reihenfolge angezeigt werden, in der sie durchgeführt werden müssen, sofern eine solche Reihenfolge vorgegeben ist. Dem Benutzer können auch Anweisungen angezeigt werden, wie der Schritt durchzuführen ist. Der Benutzer kann daraufhin den Anweisungen folgen.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Verfahren zum Betreiben einer Anlage (1), wobei die Anlage (1) eine Anlage zum Verarbeiten von flüssigen Lebensmittelprodukten ist,
wobei das Betreiben der Anlage (1) automatisch ausführbare Schritte und manuell an verschiedenen Elementen (2, 3, 4, 5, 6, 7) der Anlage (1) auszuführende Schritte umfasst,
wobei an mindestens einem der verschiedenen Elemente (2, 3, 4, 5, 6, 7) maschinenlesbare Informationen (2a, 3a, 4a, 5a, 6a, 7a) angebracht sind, die das jeweilige Element (2, 3, 4, 5, 6, 7) identifizieren,
wobei in einer Recheneinheit (10) den manuell auszuführenden Schritten jeweils ein Durchführungsstatus zugeordnet ist, der unter der Bedingung auf "durchgeführt" gesetzt wird, dass mittels eines mobilen Endgeräts (9) die maschinenlesbaren Informationen (2a, 3a, 4a, 5a, 6a, 7a) an mindestens einem vorgegebenen Element (2, 3, 4, 5, 6, 7) ausgelesen werden, und
wobei eine Steuereinrichtung (8) die automatisch ausführbaren Schritte unter Berücksichtigung des Durchführungsstatus steuert,
wobei die Steuereinrichtung (8) die automatisch ausführbaren Schritte derart steuert, dass vorgegebene automatisch ausführbare Schritte erst ausgeführt werden, nachdem der Durchführungsstatus vorgegebener manuell auszuführender Schritte auf "durchgeführt" gesetzt wurde,
wobei eine Repräsentation zumindest eines Teils der manuell auszuführenden Schritte und ihres jeweiligen aktuellen Durchführungsstatus auf einem Anzeigeabschnitt (9a), beispielsweise einem Display, des mobilen Endgeräts (9) angezeigt werden, und
wobei
a) die verschiedenen Elemente (2, 3, 4, 5, 6, 7) der Anlage (1) ein Verriegelungselement umfassen, an dem eine maschinenlesbare Information angebracht ist, die dieses identifizieren,
wobei die manuell auszuführenden Schritte ein Verriegeln zweier vorgegebener Elemente (3, 4; 5, 6), insbesondere Rohre, Schläuche und/oder Stutzen, der Anlage (1) mittels des Verriegelungselements umfassen, und
wobei die relative Position der maschinenlesbaren Information, die das Verriegelungselement kennzeichnet, und einer weiteren, ebenfalls maschinenlesbaren Information anzeigt, ob die beiden Elemente verriegelt sind, woraufhin der Durchführungsstatus auf "durchgeführt" gesetzt wird;
oder
b) die verschiedenen Elemente (2, 3, 4, 5, 6, 7) der Anlage (1) ein Verriegelungselement umfassen,
wobei die manuell auszuführenden Schritte ein Verriegeln zweier vorgegebener Elemente (3, 4; 5, 6), insbesondere Rohre, Schläuche und/oder Stutzen, der Anlage (1) mittels des Verriegelungselements umfassen,
wobei mittels einer bzw. der Kamera (9c) des mobilen Endgeräts (9) ein Foto des Verriegelungselements erstellt wird,
wobei das Benutzerendgerät oder die Recheneinheit mittels eines Bildverarbeitungsverfahrens das erstellte Foto mit einen hinterlegten Foto vergleicht, das den Sollzustand nach der Verriegelung der zu verriegelnden Elemente zeigt, und
wobei durch den Vergleich der beiden Fotos bestimmt wird, ob der Schritt des Verriegelns korrekt ausgeführt wurde und der Durchführungsstatus auf "durchgeführt" gesetzt wird, wenn bestimmt wird, dass der Schritt des Verriegelns korrekt ausgeführt wurde.

2. Verfahren nach einem der vorangegangenen Ansprüche,
wobei die manuell auszuführenden Schritte ein Verbinden zweier vorgegebener Elemente (3, 4; 5, 6), insbesondere Rohre, Schläuche und/oder Stutzen, der Anlage (1) umfassen,
wobei mittels der Recheneinheit (10) bestimmt wird, ob zwei unmittelbar nacheinander mit dem mobilen Endgerät (9) ausgelesene maschinenlesbare Informationen (2a, 3a, 4a, 5a, 6a, 7a) die beiden vorgegebenen Elemente (3, 4, 5, 6, 7) identifizieren, und optional, ob die beiden unmittelbar nacheinander ausgelesenen maschinenlesbaren Informationen (2a, 3a, 4a, 5a, 6a, 7a) in einem vorgegebenen Zeitfenster ausgelesen wurden.

3. Verfahren nach Anspruch 2, wobei der Durchführungsstatus für den Schritt des Verbindens der beiden vorgegebenen Elemente unter der Bedingung auf "durchgeführt" gesetzt wird, dass die unmittelbar nacheinander ausgelesenen maschinenlesbaren Informationen (2a, 3a, 4a, 5a, 6a, 7a) die beiden vorgegebenen Elemente (3, 4, 5, 6, 7) identifizieren, und insbesondere in einem vorgegebenen Zeitfenster ausgelesen wurden, und andernfalls auf "nicht durchgeführt" oder "fehlerhaft durchgeführt" gesetzt wird.

4. Verfahren nach Anspruch 3, wobei von dem mobilen Endgerät (9) eine, beispielsweise akustische, optische und/oder haptische, Warnung ausgegeben wird, wenn die Bedingung nicht erfüllt ist.

5. Verfahren nach einem der vorangegangenen Ansprüche, wobei die maschinenlesbaren Informationen (2a, 3a, 4a, 5a, 6a, 7a) optisch auslesbare Informationen, beispielsweise einen Strichcode oder einen QR-Code^{©}, und/oder elektronisch auslesbare Informationen, beispielsweise mittels einer RFID- oder NFC-Antennen auslesbare Informationen, umfassen.

6. Verfahren nach einem der vorangegangenen Ansprüche, wobei an mindestens einem der Elemente (2, 3, 4, 5, 6, 7) ein RFID-Tag oder eine NFC Antenne angebracht ist, die die maschinenlesbaren Informationen (2a, 3a, 4a, 5a, 6a, 7a) enthalten, und wobei die Informationen mittels einer entsprechenden Antenne (9b) des mobilen Endgeräts (9) ausgelesen werden.

7. Verfahren nach einem der vorangegangenen Ansprüche, wobei an mindestens einem der Elemente (2, 3, 4, 5, 6, 7) ein QR-Code^{©} oder ein Strichcode angebracht ist und die Informationen mittels einer Kamera (9c) des mobilen Endgeräts (9) ausgelesen werden.

8. Verfahren nach einem der vorangegangenen Ansprüche, wobei ein Bestimmen, Ändern und/oder Speichern des Durchführungsstatus der manuell auszuführenden Schritte mittels des mobilen Endgeräts (9) erfolgen und der jeweils aktuelle Durchführungsstatus eines oder mehrerer der auszuführenden Schritte von dem mobilen Endgerät (9) mittels einer Datenverbindung (11) an die Steuereinrichtung (8) übertragen wird.

9. Verfahren nach einem der Ansprüche 1 bis 7, wobei das mobile Endgerät (9) die maschinenlesbaren Informationen (2a, 3a, 4a, 5a, 6a, 7a) ausliest und mittels einer Datenverbindung (11) an die Steuereinrichtung (8) überträgt und die Steuereinrichtung (8) ein Bestimmen, Ändern, und/oder Speichern des Durchführungsstatus durchführt.

10. System mit einer Anlage (1) zum Verarbeiten von flüssigen Lebensmittelprodukten,
wobei die Anlage (1) derart ausgebildet ist, dass das Betreiben der Anlage (1) automatisch ausführbare Schritte und manuell an verschiedenen Elementen (2, 3, 4, 5, 6, 7) der Anlage (1) auszuführende Schritte umfasst,
wobei an den verschiedenen Elementen (2, 3, 4, 5, 6, 7) maschinenlesbare Informationen (2a, 3a, 4a, 5a, 6a, 7a) angebracht sind, die das jeweilige Element (2, 3, 4, 5, 6, 7) identifizieren,
wobei das System, insbesondere die Anlage (1), eine Steuereinrichtung (8) zum Steuern automatisch ausführbarer Prozessschritte umfasst,
wobei das System ein mobiles Endgerät (9) umfasst und
wobei die Steuereinrichtung (8) derart ausgebildet ist, dass sie die automatisch ausführbaren Schritte unter Berücksichtigung eines Durchführungsstatus von einem oder mehreren der manuell auszuführenden Schritte steuert, wobei der Durchführungsstatus wiedergibt, ob mittels des mobilen Endgeräts (9) die maschinenlesbaren Informationen (2a, 3a, 4a, 5a, 6a, 7a) an mindestens einem vorgegebenen Element (2, 3, 4, 5, 6, 7) ausgelesen wurden,
wobei die Steuereinrichtung (8) derart ausgebildet ist, dass sie die automatisch ausführbaren Schritte derart steuert, dass vorgegebene automatisch ausführbare Schritte erst ausgeführt werden, nachdem der Durchführungsstatus vorgegebener manuell auszuführender Schritte auf "durchgeführt" gesetzt wurde,
wobei die Steuereinrichtung (8) derart ausgebildet ist, dass eine Repräsentation zumindest eines Teils der manuell auszuführenden Schritte und ihres jeweiligen aktuellen Durchführungsstatus auf einem Anzeigeabschnitt (9a), beispielsweise einem Display, des mobilen Endgeräts (9) angezeigt werden,
und wobei
a) die verschiedenen Elemente (2, 3, 4, 5, 6, 7) der Anlage (1) ein Verriegelungselement umfassen, an dem eine maschinenlesbare Information angebracht ist, die dieses identifizieren,
wobei die manuell auszuführenden Schritte ein Verriegeln zweier vorgegebener Elemente (3, 4; 5, 6), insbesondere Rohre, Schläuche und/oder Stutzen, der Anlage (1) mittels des Verriegelungselements umfassen, und
wobei die relative Position der maschinenlesbaren Information, die das Verriegelungselement kennzeichnet, und einer weiteren, ebenfalls maschinenlesbaren, Information anzeigt, ob die beiden Elemente verriegelt sind, woraufhin der Durchführungsstatus durch die Steuereinrichtung auf "durchgeführt" gesetzt wird;
oder
b) die verschiedenen Elemente (2, 3, 4, 5, 6, 7) der Anlage (1) ein Verriegelungselement umfassen,
wobei die manuell auszuführenden Schritte ein Verriegeln zweier vorgegebener Elemente (3, 4; 5, 6), insbesondere Rohre, Schläuche und/oder Stutzen, der Anlage (1) mittels des Verriegelungselements umfassen,
wobei mittels einer bzw. der Kamera (9c) des mobilen Endgeräts (9) ein Foto des Verriegelungselements erstellt wird,
wobei das Benutzerendgerät oder die Recheneinheit mittels eines Bildverarbeitungsverfahrens das erstellte Foto mit einen hinterlegten Foto vergleicht, das den Sollzustand nach der Verriegelung der zu verriegelnden Elemente zeigt, und
wobei durch den Vergleich der beiden Fotos bestimmt wird, ob der Schritt des Verriegelns korrekt ausgeführt wurde und der Durchführungsstatus auf "durchgeführt" gesetzt wird, wenn bestimmt wird, dass der Schritt des Verriegelns korrekt ausgeführt wurde.

11. System nach Anspruch 10, wobei die Steuereinrichtung (8) derart ausgebildet ist, dass sie ausgelesene maschinenlesbare Informationen (2a, 3a, 4a, 5a, 6a, 7a) von dem mobilen Endgerät (9) empfängt und anhand der empfangenen maschinenlesbaren Informationen (2a, 3a, 4a, 5a, 6a, 7a) bestimmt, ob der Durchführungsstatus eines oder mehrerer der manuell auszuführenden Schritte geändert, insbesondere auf "durchgeführt" gesetzt, werden muss und, wenn dies der Fall ist, den Durchführungsstatus entsprechend ändert.

12. System nach Anspruch 10 oder 11, wobei die Steuereinrichtung (8) zum Empfangen von Informationen, die einen manuell auszuführenden Schritt und seinen Durchführungsstatus identifizieren, ausgebildet ist und wobei das mobile Endgerät oder eine externe Recheneinheit zum Bestimmen, Ändern und Speichern des Durchführungsstatus ausgebildet ist.

## Claims

1. A method for operating a plant (1), wherein the plant (1) is a plant for processing liquid food products,
wherein operating the plant (1) comprises automatically executable steps and steps to be executed manually on various elements (2, 3, 4, 5, 6, 7) of the plant (1),
wherein machine-readable information (2a, 3a, 4a, 5a, 6a, 7a) is attached to at least one of the various elements (2, 3, 4, 5, 6, 7), which identifies the respective element (2, 3, 4, 5, 6, 7),
wherein, in a computing unit (10), each of the steps to be executed manually is assigned an execution status that is set to "executed" on the condition that the machine-readable information (2a, 3a, 4a, 5a, 6a, 7a) is read from at least one predetermined element (2, 3, 4, 5, 6, 7) by means of a mobile terminal (9), and
wherein a control device (8) controls the automatically executable steps while taking into account the execution status,
wherein the control device (8) controls the automatically executable steps such that predetermined automatically executable steps are executed only after the execution status of predetermined steps to be executed manually has been set to "executed,"
wherein a representation of at least a portion of the steps to be executed manually and their respective current execution statuses is displayed on a display section (9a), such as a display, of the mobile terminal (9), and
wherein
a) the various elements (2, 3, 4, 5, 6, 7) of the plant (1) comprise a locking element to which machine-readable information is attached that identifies it,
wherein the steps to be executed manually comprise locking two predetermined elements (3, 4; 5, 6) of the plant (1), in particular pipes, hoses, and/or fittings, by means of the locking element, and
wherein the relative position of the machine-readable information specifying the locking element and additional, likewise machine-readable information indicates whether the two elements are locked, whereupon the execution status is set to "executed";
or
b) the various elements (2, 3, 4, 5, 6, 7) of the plant (1) comprise a locking element,
wherein the steps to be executed manually comprise locking two predetermined elements (3, 4; 5, 6) of the plant (1), in particular pipes, hoses, and/or fittings, by means of the locking element,
wherein a photo of the locking element is taken by means of a or the camera (9c) of the mobile terminal (9),
wherein the user terminal or computing unit compares the captured photo, by means of an image processing method, with a previously stored photo showing the desired state after the elements to be locked have been locked, and
wherein, by comparing the two photos, it is determined whether the locking step was executed correctly, and the execution status is set to "executed" if it is determined that the locking step was executed correctly.

2. A method according to any of the preceding claims,
wherein the steps to be executed manually comprise connecting two predetermined elements (3, 4; 5, 6) of the plant (1), in particular pipes, hoses, and/or fittings,
wherein, by means of the computing unit (10), it is determined whether two pieces of machine-readable information (2a, 3a, 4a, 5a, 6a, 7a) read immediately one after the other using the mobile terminal (9) identify the two predetermined elements (3, 4, 5, 6, 7), and, optionally, whether the two pieces of machine-readable information (2a, 3a, 4a, 5a, 6a, 7a) read immediately one after the other were read within a predetermined time window.

3. The method according to claim 2, wherein the execution status for the step of connecting the two predetermined elements is set to "executed" on the condition that the pieces of machine-readable information (2a, 3a, 4a, 5a, 6a, 7a) read immediately one after the other identify the two predetermined elements (3, 4, 5, 6, 7) and, in particular, were read within a predetermined time window, and is otherwise set to "not executed" or "executed with an error."

4. The method according to claim 3, wherein a warning, such as an acoustic, visual, and/or haptic warning, is issued by the mobile terminal (9) if the condition is not met.

5. A method according to any one of the preceding claims, wherein the machine-readable information (2a, 3a, 4a, 5a, 6a, 7a) comprises optically readable information, such as a bar code or a QR code^{©}, and/or electronically readable information, such as information readable by means of an RFID or NFC antenna.

6. A method according to any one of the preceding claims, wherein an RFID tag or an NFC antenna, which contains the machine-readable information, is attached to at least one of the elements (2a, 3a, 4a, 5a, 6a, 7a), and wherein the information is read by means of a corresponding antenna (9b) of the mobile terminal (9).

7. A method according to any one of the preceding claims, wherein a QR Code^{©} or a bar code is attached to at least one of the elements (2, 3, 4, 5, 6, 7), and the information is read by means of a camera (9c) of the mobile device (9).

8. A method according to one of the preceding claims, wherein determining, changing, and/or storing the execution status of the steps to be executed manually is performed using the mobile terminal (9), and the current execution status of one or more of the steps to be executed is transmitted from the mobile terminal (9) to the control device (8) by means of a data connection (11).

9. A method according to any one of claims 1 through 7, wherein the mobile terminal (9) reads the machine-readable information (2a, 3a, 4a, 5a, 6a, 7a) and transmits it to the control device (8) by means of a data connection (11), and the control device (8) performs the steps of determining, changing, and/or saving the execution status.

10. A system comprising a plant (1) for processing liquid food products,
wherein the plant (1) is configured such that its operation comprises automatically executable steps and steps to be executed manually on various elements (2, 3, 4, 5, 6, 7) of the plant (1),
wherein machine-readable information (2a, 3a, 4a, 5a, 6a, 7a) is attached to the various elements (2, 3, 4, 5, 6, 7), which identifies the respective element (2, 3, 4, 5, 6, 7),
wherein the system, in particular the plant (1), comprises a control device (8) for controlling automatically executable process steps,
wherein the system comprises a mobile terminal (9) and
wherein the control device (8) is configured such that it controls the automatically executable steps while taking into account an execution status of one or more of the steps to be executed manually, wherein the execution status indicates whether, by means of the mobile terminal (9) has read the machine-readable information (2a, 3a, 4a, 5a, 6a, 7a) from at least one predetermined element (2, 3, 4, 5, 6, 7),
wherein the control device (8) is configured such that it controls the automatically executable steps such that predetermined automatically executable steps are executed only after the execution status of predetermined manually executable steps has been set to "executed,"
wherein the control device (8) is configured such that a representation of at least a portion of the steps to be executed manually and their respective current execution statuses is displayed on a display section (9a), such as a display, of the mobile terminal (9),
and wherein
a) the various elements (2, 3, 4, 5, 6, 7) of the plant (1) comprise a locking element to which machine-readable information is attached that identifies it,
wherein the steps to be executed manually comprise locking two predetermined elements (3, 4; 5, 6) of the plant (1), in particular pipes, hoses, and/or fittings, by means of the locking element, and
wherein the relative position of the machine-readable information specifying the locking element and additional, likewise machine-readable information indicates whether the two elements are locked, whereupon the execution status is set to "executed" by means of the control device;
or
b) the various elements (2, 3, 4, 5, 6, 7) of the plant (1) comprise a locking element,
wherein the steps to be executed manually comprise locking two predetermined elements (3, 4; 5, 6) of the plant (1), in particular pipes, hoses, and/or fittings, by means of the locking element,
wherein a photo of the locking element is taken by means of a or the camera (9c) of the mobile terminal (9),
wherein the user terminal or computing unit compares the captured photo, by means of an image processing method, with a previously stored photo showing the desired state after the elements to be locked have been locked, and
wherein, by comparing the two photos, it is determined whether the locking step was executed correctly, and the execution status is set to "executed" if it is determined that the locking step was executed correctly.

11. The system according to claim 10, wherein the control device (8) is configured such that it receives machine-readable information (2a, 3a, 4a, 5a, 6a, 7a), that has been read, from the mobile terminal (9) and, based on the received machine-readable information (2a, 3a, 4a, 5a, 6a, 7a) determines whether the execution status of one or more of the steps to be executed manually must be changed, in particular set to "executed", and, if so, changes the execution status accordingly.

12. A system according to claim 10 or 11, wherein the control device (8) is configured to receive information identifying a step to be performed manually and its execution status, and wherein the mobile terminal or an external computing unit is configured to determine, modify, and store the execution status.

## Revendications

1. Procédé d'exploitation d'une installation (1), dans lequel l'installation (1) est une installation permettant de traiter des produits alimentaires liquides,
dans lequel l'exploitation de l'installation (1) comprend des étapes pouvant être mises en œuvre de manière automatique et des étapes à mettre en œuvre manuellement au niveau de différents éléments (2, 3, 4, 5, 6, 7) de l'installation (1),
dans lequel des informations lisibles par ordinateur (2a, 3a, 4a, 5a, 6a, 7a) identifiant l'élément respectif (2, 3, 4, 5, 6, 7) sont apposées sur au moins un des différents éléments (2, 3, 4, 5, 6, 7),
dans lequel un état de mise en œuvre respectif, placé sur « mis en œuvre » à la condition que les informations lisibles par ordinateur (2a, 3a, 4a, 5a, 6a, 7a) soient lues au moyen d'un appareil mobile (9) au niveau d'au moins un élément (2, 3, 4, 5, 6, 7) prédéfini, est associé dans une unité de calcul (10) aux étapes à mettre en œuvre manuellement, et
dans lequel un dispositif de commande (8) commande, en tenant compte de l'état de mise en œuvre, les étapes pouvant être mises en œuvre de manière automatique, dans lequel le dispositif de commande (8) commande les étapes pouvant être mises en œuvre de manière automatique de telle manière que des étapes prédéfinies pouvant être mises en œuvre de manière automatique ne sont mises en œuvre qu'après que l'état de mise en œuvre d'étapes prédéfinies à mettre en œuvre manuellement a été placé sur « mis en œuvre »,
dans lequel une représentation d'au moins une partie des étapes à mettre en œuvre manuellement et de leur état de mise en œuvre actuel respectif est affichée sur une section d'affichage (9a), par exemple un écran, du terminal mobile (9), et
dans lequel :
a) les différents éléments (2, 3, 4, 5, 6, 7) de l'installation (1) comprennent un élément de verrouillage sur lequel sont apposées des informations lisibles par ordinateur permettant de l'identifier,
dans lequel les étapes à mettre en œuvre manuellement comprennent un verrouillage de deux éléments (3, 4 ; 5, 6) prédéfinis, en particulier des tubes, des tuyaux et/ou des tubulures, de l'installation (1) au moyen de l'élément de verrouillage, et
dans lequel la position relative des informations lisibles par ordinateur identifiant l'élément de verrouillage et d'autres informations également lisibles par ordinateur indique si les deux éléments sont verrouillés, après quoi l'état de mise en œuvre est placé sur « mis en œuvre » ;
ou
b) les différents éléments (2, 3, 4, 5, 6, 7) de l'installation (1) comprennent un élément de verrouillage,
dans lequel les étapes à mettre en œuvre manuellement comprennent un verrouillage de deux éléments (3, 4 ; 5, 6) prédéfinis, en particulier des tubes, des tuyaux et/ou des tubulures, de l'installation (1) au moyen de l'élément de verrouillage, et
dans lequel une photo de l'élément de verrouillage est prise au moyen d'une ou de la caméra (9c) du terminal mobile (9),
dans lequel le terminal utilisateur ou l'unité de calcul compare, au moyen d'un procédé de traitement d'image, la photo créée avec une photo enregistrée montrant l'état cible après le verrouillage des éléments à verrouiller, et
dans lequel la comparaison des deux photos détermine si l'étape du verrouillage a été mise en œuvre correctement et l'état de mise en œuvre est placé sur « mis en œuvre » lorsqu'il est déterminé que l'étape du verrouillage a été mis en œuvre correctement.

2. Procédé selon l'une quelconque des revendications précédentes,
dans lequel les étapes à mettre en œuvre manuellement comprennent un verrouillage de deux éléments (3, 4 ; 5, 6) prédéfinis, en particulier des tubes, des tuyaux et/ou des tubulures, de l'installation (1) au moyen de l'élément de verrouillage, et
dans lequel l'unité de calcul (10) détermine si deux informations lisibles par ordinateur (2a, 3a, 4a, 5a, 6a, 7a) lues immédiatement l'une après l'autre par le terminal mobile (9) identifient les deux éléments (3, 4, 5, 6, 7) prédéfinis et éventuellement si les deux informations lisibles par ordinateur (2a, 3a, 4a, 5a, 6a, 7a) lues immédiatement l'une après l'autre ont été lues dans une fenêtre temporelle prédéfinie.

3. Procédé selon la revendication 2, dans lequel l'état de mise en œuvre pour l'étape de connexion des deux éléments prédéfinis est placé sur « mis en œuvre » à la condition que les informations lisibles par ordinateur (2a, 3a, 4a, 5a, 6a, 7a) lues immédiatement l'une après l'autre identifient les deux éléments (3, 4, 5, 6, 7) prédéfinis et, en particulier, ont été lues dans une fenêtre temporelle prédéfinie, et dans le cas contraire, sont placés sur « non mis en œuvre » ou « mis en œuvre de manière incorrecte ».

4. Procédé selon la revendication 3, dans lequel un avertissement, par exemple acoustique, optique et/ou haptique, est émis par le terminal mobile (9) si la condition n'est pas remplie.

5. Procédé selon l'une quelconque des revendications précédentes, dans lequel les informations lisibles par ordinateur (2a, 3a, 4a, 5a, 6a, 7a) comprennent des informations lisibles optiquement, par exemple un code-barres ou un code QR^{©}, et/ou des informations lisibles électroniquement, par exemple des informations lisibles au moyen d'une antenne RFID ou NFC.

6. Procédé selon l'une quelconque des revendications précédentes, dans lequel une étiquette RFID ou une antenne NFC contenant les informations lisibles par ordinateur (2a, 3a, 4a, 5a, 6a, 7a) est apposée sur au moins un des éléments (2, 3, 4, 5, 6, 7), et dans lequel les informations sont lues au moyen d'une antenne (9b) correspondante du terminal mobile (9).

7. Procédé selon l'une quelconque des revendications précédentes, dans lequel un code QR^{©} ou un code-barres est apposé sur au moins un des éléments (2, 3, 4, 5, 6, 7) et les informations sont lues au moyen d'une caméra (9c) du terminal mobile (9).

8. Procédé selon l'une quelconque des revendications précédentes, dans lequel la détermination, la modification et/ou l'enregistrement de l'état de mise en œuvre des étapes à mettre en œuvre manuellement ont lieu au moyen du terminal mobile (9) et l'état de mise en œuvre actuel respectif d'une ou de plusieurs des étapes à mettre en œuvre est transmis du terminal mobile (9) au dispositif de commande (8) au moyen d'une connexion de données (11).

9. Procédé selon l'une quelconque des revendications 1 à 7, dans lequel le terminal mobile (9) lit les informations lisibles par ordinateur (2a, 3a, 4a, 5a, 6a, 7a) et les transmet au dispositif de commande (8) au moyen d'une liaison de données (11) et le dispositif de commande (8) met en œuvre une détermination, une modification et/ou un enregistrement de l'état de mise en œuvre.

10. Système comprenant une installation (1) permettant de traiter des produits alimentaires liquides,
dans lequel l'installation (1) est conçue de telle manière que l'exploitation de l'installation (1) comprend des étapes pouvant être mises en œuvre de manière automatique et des étapes à mettre en œuvre manuellement au niveau de différents éléments (2, 3, 4, 5, 6, 7) de l'installation (1),
dans lequel des informations lisibles par ordinateur (2a, 3a, 4a, 5a, 6a, 7a) identifiant l'élément (2, 3, 4, 5, 6, 7) respectif sont apposées sur les différents éléments (2, 3, 4, 5, 6, 7),
dans lequel le système, en particulier l'installation (1), comprend un dispositif de commande (8) permettant de commander des étapes de procédé pouvant être mises en œuvre de manière automatique,
dans lequel le système comprend un terminal mobile (9) et
dans lequel le dispositif de commande (8) est conçu de telle manière qu'il commande les étapes pouvant être mises en œuvre de manière automatique en tenant compte d'un état de mise en œuvre d'une ou de plusieurs des étapes à mettre en œuvre manuellement, dans lequel l'état de mise en œuvre signale si les informations lisibles par ordinateur (2a, 3a, 4a, 5a, 6a, 7a) ont été lues au niveau d'au moins un élément (2, 3, 4, 5, 6, 7) prédéfini au moyen du terminal mobile (9),
dans lequel le dispositif de commande (8) est conçu de telle manière qu'il commande les étapes pouvant être mises en œuvre de manière automatique de telle manière que les étapes prédéfinies pouvant être mises en œuvre de manière automatique ne sont mises en œuvre qu'après que l'état de mise en œuvre des étapes prédéfinies à mettre en œuvre manuellement a été placé sur « mis en œuvre »,
dans lequel le dispositif de commande (8) est conçu de telle manière qu'une représentation d'au moins une partie des étapes à mettre en œuvre manuellement et de leur état de mise en œuvre actuel respectif est affichée sur une section d'affichage (9a), par exemple un écran, du terminal mobile (9),
et dans lequel
a) les différents éléments (2, 3, 4, 5, 6, 7) de l'installation (1) comprennent un élément de verrouillage sur lequel sont apposées des informations lisibles par ordinateur permettant de l'identifier,
dans lequel les étapes à mettre en œuvre manuellement comprennent un verrouillage de deux éléments (3, 4 ; 5, 6) prédéfinis, en particulier des tubes, des tuyaux et/ou des tubulures, de l'installation (1) au moyen de l'élément de verrouillage, et
dans lequel la position relative des informations lisibles par ordinateur identifiant l'élément de verrouillage et d'autres informations également lisibles par ordinateur indique si les deux éléments sont verrouillés, après quoi l'état de mise en œuvre est placé sur « mis en œuvre » grâce au dispositif de commande ;
ou
b) les différents éléments (2, 3, 4, 5, 6, 7) de l'installation (1) comprennent un élément de verrouillage,
dans lequel les étapes à mettre en œuvre manuellement comprennent un verrouillage de deux éléments (3, 4 ; 5, 6) prédéfinis, en particulier des tubes, des tuyaux et/ou des tubulures, de l'installation (1) au moyen de l'élément de verrouillage, et
dans lequel une photo de l'élément de verrouillage est prise au moyen d'une ou de la caméra (9c) du terminal mobile (9),
dans lequel le terminal utilisateur ou l'unité de calcul compare, au moyen d'un procédé de traitement d'image, la photo créée avec une photo enregistrée montrant l'état cible après le verrouillage des éléments à verrouiller, et
dans lequel la comparaison des deux photos détermine si l'étape du verrouillage a été mise en œuvre correctement et l'état de mise en œuvre est placé sur « mis en œuvre » lorsqu'il est déterminé que l'étape du verrouillage a été mis en œuvre correctement.

11. Système selon la revendication 10, dans lequel le dispositif de commande (8) est conçu de telle manière qu'il reçoit du terminal mobile (9) des informations lisibles par ordinateur (2a, 3a, 4a, 5a, 6a, 7a) et qu'il détermine, à l'aide des informations lisibles par ordinateur (2a, 3a, 4a, 5a, 6a, 7a) reçues, si l'état de mise en œuvre d'une ou de plusieurs des étapes à mettre en œuvre manuellement doit être modifié, en particulier doit être placé sur « mis en œuvre » et, si tel est le cas, modifie l'état de mise en œuvre en conséquence.

12. Système selon la revendication 10 ou 11, dans lequel le dispositif de commande (8) est conçu pour recevoir des informations identifiant une étape à mettre en œuvre manuellement et son état de mise en œuvre, et dans lequel le terminal mobile ou une unité de calcul externe est conçu(e) pour déterminer, modifier et enregistrer l'état de mise en œuvre.
